# EUROPÄISCHE PATENTSCHRIFT

(11) **EP 0 281 010 B1**
(45) Veröffentlichungstag und Bekanntmachung des Hinweises auf die Patenterteilung: **07.02.1996**
(21) Anmeldenummer: 88102753.6
(22) Anmeldetag: 24.02.1988
(51) Int. Cl.: H04J 3/16, H04J 3/12, H04L 5/22

(54) **Schaltungsanordnung zum übertragen von Datensignalen über eine Zeitmultiplex-Übertragungsleitung**
Apparatus for the transmission of data signals via a TDM transmission line
Dispositif pour la transmission de signaux de données par une ligne de transmission multiplexée dans le temps

(30) Priorität: 03.03.1987 DE 3706757
(43) Veröffentlichungstag der Anmeldung: 07.09.1988
(73) Patentinhaber: SIEMENS AKTIENGESELLSCHAFT, D-80333 München (DE)
(72) Erfinder: Reisinger, Konrad, Dipl.-Ing., D-8011 Zorneding (DE); Beck, Jörn, Dipl.-Ing., D-8027 Neuried (DE)

(56) Entgegenhaltungen:
- US-A- 4 245 340
- US-A- 4 467 469

## Beschreibung

Die Erfindung betrifft eine Schaltungsanordnung zum Übertragen von Datensignalen, die von einer Vielzahl von Datenübertragungseinrichtungen aufgenommen und/oder abgegeben werden, über eine im Zeitmultiplex-Betrieb ausgenutzte Übertragungsleitung, auf welcher für die Übertragung von Datensignalen jeder der Datenübertragungseinrichtungen entsprechend der für diese jeweils vorgesehenen Übertragungsgeschwindigkeit mindestens ein Zeitkanal einer Vielzahl von Zeitkanälen mit jeweils zyklisch wiederholt in aufeinanderfolgenden Multiplexrahmen auftretenden Zeitschlitzen zugeordnet ist, wobei von den insgesamt zur Verfügung stehenden Zeitkanälen eine festgelegte Anzahl als Steuerkanäle für die Übertragung von Steuersignalen reserviert ist und für die Übertragung von Steuersignalen nicht benutzte Steuerkanale für die Übrtragung von Datensignalen benutzbar sind.

Eine derartige Schaltungsanordnung ist bereits aus der US-A-4,245,340 bekannt. Bei dieser bekannten Schaltungsanordnung werden in jedem sechsten Rahmen Signalisierungsinformationen übertragen. Für die Identifizierung jedes dieser Signalisierungsrahmen ist ein Rahmenkanal mit einer Bitstelle pro Rahmen festgelegt. In diesem Rahmenkanal wird in jedem zweiten Rahmen an der dafür vorgesehenen Bitstelle ein Bit eines festgelegten Bitmusters übertragen. Dabei wird ein zusätzlicher Datenkanal dadurch gewonnen, daß die für die Übertragung dieses Bitmusters nicht benutzten Bitstellen dieses Rahmenkanals für die Übertragung von Datenbits benutzt werden.

Darüber hinaus ist es bereits durch die US-A-4,467,469 bekannt, in einem PCM-Datenstrom nicht benutzte Datenbits für die Übertragung von Steuersignalen zu benutzen.

Schließlich sind beispielweise durch die CCITT-Empfehlung X.51 Multiplexrahmen festgelegt, welche aus vier Unterrahmen mit jeweils insgesamt 640 Zeitschlitzen gebildet sind. Von diesen Zeitschlitzen sind 600 für die Übertragung von Datensignalen vorgesehen, während die übrigen 40 Zeitschlitze für die Übertragung von Steuersignalen, wie z.B. von Synchronisiersignalen und von national sowie international verwendbaren Organisationssignalen, reserviert sind. Von den zuletzt genannten Zeitschlitzen ist dabei lediglich ein Teil für die Übertragung von Steuersignalen benutzt.

Aufgabe der vorliegenden Erfindung ist es, einen Weg zu zeigen, wie eine Schaltungsanordnung der eingangs genannten Art ausgebildet werden kann, um mit einem geringen Steuerungsaufwand und schaltungstechnischen Aufwand Datensignale, die von Datenübertragungseinrichtungen aufgenommen und/oder abgegeben werden, über eine im Zeitmultiplex-Betrieb ausgenutzte Übertragungsleitung übertragen zu können.

Gelöst wird diese Aufgabe bei einer Schaltungsanordnung der eingangs genannten Art gemäß der vorliegenden Erfindung dadurch, daß eine Mehrzahl von mit Anschlußleitungen verbundenen Kanalgruppeneinrichtungen vorgesehen ist, welche jeweils über Kanalspeichermittel mit einer der Anzahl der Anschlußleitungen entsprechenden Anzahl von Speicherbereichen verfügen,
daß in dem jeweiligen Speicherbereich an die jeweilige Anschlußleitung abzugebende bzw. von dieser aufzunehmende Datensignale speicherbar sind,
daß die Kanalgruppeneinrichtungen gemeinsam über ein Busleitungssystem mit einem Zentralprozessor verbunden sind, welcher einerseits die Bildung von über die Übertragungsleitung abzugebenden Multiplexrahmen und andererseits die Auflösung von über die Übertragungsleitung aufgenommenen Multiplexrahmen vornimmt,
daß in dem Zentralprozessor Zuordnungsspeichermittel vorgesehen sind, in welchen die Zuordnung zwischen den in den Multiplexrahmen festgelegten Zeitkanälen und den Kanalgruppeneinrichtungen sowie den mit diesen verbundenen Anschlußleitungen gespeichert ist,
daß der Zentralprozessor erste, in die Bildung von Multiplexrahmen einbezogene Zählmittel sowie zweite, in die Auflösung von Multiplexrahmen einbezogene zählmittel aufweist, deren Zählerstände den Zeitschlitzen innerhalb eines Multiplexrahmens zugeordnet sind,
daß nach Maßgabe der zählerstände der ersten zählmittel und der in dem Zuordnungsspeicher gespeicherten Informationen die einzelnen Kanalgruppeneinrichtungen für die Abgabe von in die Multiplexrahmen einzufügenden Datensignalen ansteuerbar sind, und daß nach Maßgabe der zahlerstände der zweiten Zahlmittel und der in dem Zuordnungsspeicher gespeicherten Informationen den einzelnen Kanalgruppeneinrichtungen in Multiplexrahmen enthaltene Datensignale zuführbar sind.

Die Erfindung bringt dabei den Vorteil mit sich, daß die für die Bildung und Auflösung der Multiplexrahmen erforderlichen Steuerungsvorgänge ausschließlich in dem Zentralprozessor ablaufen und die Kanalgruppeneinrichtungen lediglich nach Maßgabe der in den Zuordnungsspeichermitteln geführten Informationen und der Zählerstande der Zählmittel für die Aufnahme und Abgabe von Datensignalen angesteuert werden, so daß in diesen Kanalgruppeneinrichtungen weder steuerungstechnische noch schaltungstechnische Maßnahmen für die Bildung und Auflösung der Multiplexrahmen erforderlich sind. Ein weiterer Vorteil der Erfindung besteht darin, daß lediglich durch Ändern der in den Zuordnungsspeichermitteln enthaltenen Informationen die Schaltungsanordnung flexibel an sich ändernde Erfordernisse hinsichtlich der Zuordnung der Datenkanäle und der freien Steuerkanäle zu den Datenübertragungseinrichtungen angepaßt werden kann.

Eine zweckmäßige Ausgestaltung der Kanalgruppeneinrichtungen besteht darin, daß diese jeweils eine Mikroprozessoranordnung aufweisen, an deren Busleitungssystem einerseits die Kanalspeichermittel und andererseits eine Schnittstellenanordnung angeschlossen ist, an welche die mit der jeweiligen Kanalgruppeneinrichtung verbundenen Anschlußleitungen herangeführt sind.

Im folgenden wird die Erfindung anhand von Zeichnungen beispielsweise näher erläutert.
- FIG 1: zeigt ein Zeitdiagramm für einen Multiplexrahmen gemäß CCITT-Empfehlung X.51 und
- FIG 2: zeigt eine Multiplexanordnung, bei der die Erfindung angewandt ist.

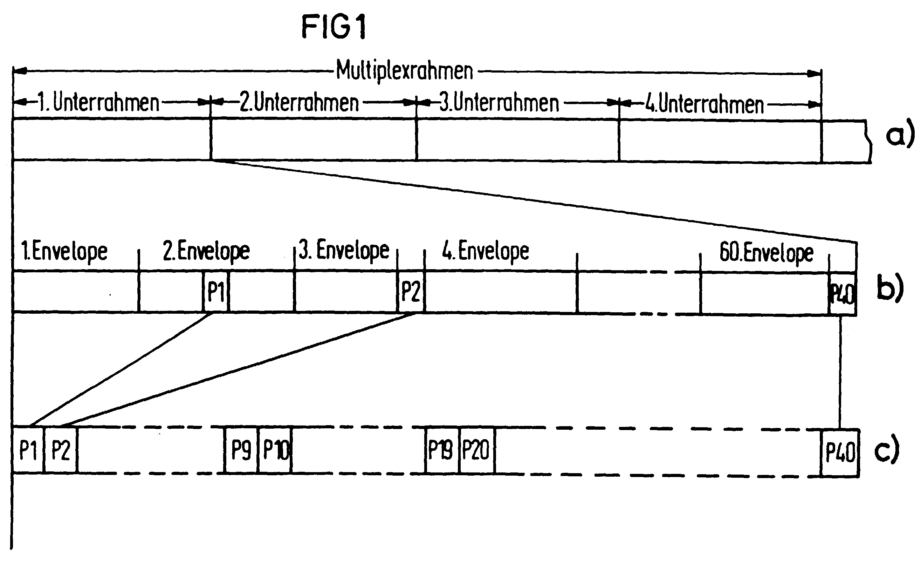

In FIG 1 (1a bis 1c) ist ein Zeitdiagramm für einen Multiplexrahmen gemäß CCITT-Empfehlung X.51 dargestellt. Dieser Multiplexrahmen, dessen Dauer 40 ms beträgt, ist nach FIG 1a in vier Unterrahmen mit einer Dauer von jeweils 10 ms unterteilt. In jedem dieser Unterrahmen sind 640 Zeitschlitze für die Übertragung von Datensignalen und Steuersignalen festgelegt. Damit weist also ein Multiplexrahmen insgesamt 2560 Zeitschlitze auf. Durch diese Zeitschlitze, die in aufeinanderfolgenden Multiplexrahmen zyklisch wiederholt auftreten, sind 2560 Zeitkanäle festgelegt. So ist beispielsweise der Zeitkanal "1" durch die in aufeinanderfolgenden Multiplexrahmen auftretenden ersten Zeitschlitze gebildet. In entsprechender Weise bilden die in aufeinanderfolgenden Multiplexrahmen auftretenden letzten Zeitschlitze den Zeitkanal "2560".

In jedem der genannten Unterrahmen sind 600 Zeitschlitze für die Übertragung von Datensignalen festgelegt. Die Datensignale werden dabei in Form von sogenannten Envelopes übertragen, die jeweils aus 8 Datenbits und 2 diesen beigefügten Steuerbits ( 1 Synchronisierbit und 1 Statusbit) gebildet sind. Damit sind also pro Unterrahmen 60 Envelopes übertragbar (FIG 1b). Nach jeweils 15 für die Übertragung von Datensignalen vorgesehenen Zeitschlitzen, d. h. also nach 1,5 Envelopes, ist jeweils ein Zeitschlitz für die Übertragung von Steuersignalen vorgesehen. Dies ergibt pro Unterrahmen 40 Zeitschlitze, die in FIG 1b mit P1 bis P40 bezeichnet sind. In FIG 1c sind die innerhalb eines Unterrahmens verteilt auftretenden Zeitschlitze zusamamengefaßt dargestellt. Diese Zeitschlitze legen zusammen mit ihnen entsprechenden, in aufeinanderfolgenden Unterrahmen wiederholt auftretenden Zeitschlitzen 40 Steuerkanäle fest. Diese 40 Steuerkanäle sind für die Übertragung von Steuersignalen reserviert. Unter diese Steuersignale fallen beispielsweise Synchronisiersignale und für nationale sowie internationale Belange verwendete Organisationssignale. Diese Organisationssignale werden auch als "housekeeping information" bezeichnet. Für die Übertragung der nationalen Organisationssignale sind beispielsweise die den Zeitschlitzen P9 bis P20 (FIG 1c) entsprechenden Steuerkanälen vorgesehen.

Von den genannten 40 Steuerkanälen ist gemäß CCITT-Empfehlung X.51 lediglich ein Teil für die Übertragung von Steuersignalen benutzt. Gemäß der vorliegenden Erfindung ist nun vorgesehen, die nicht benutzten Steuerkanäle für die Übertragung von Datensignalen zu benutzen. So ist es beispielsweise möglich, in Zeitkanälen, die durch in den Unterrahmen 1 und 3 bzw. 2 und 4 aufeinanderfolgender Multiplexrahmen auftretenden Zeitschlitze P9 bis P20 gebildet sind, mit einer Übertragungsgeschwindigkeit von 50 bit/s auftretende Datensignale zu übertragen. Auf diese Weise stehen dann zu den ohnehin für die Übertragung von Datensignalen vorgesehenen Zeitkanälen 24 weitere 50-bit/s-Zeitkanäle zur Verfügung. Darüber hinaus ist es beispielsweise durch Bildung anderer Unterrahmen-Kombinationen auch möglich, Zeitschlitze festzulegen, in denen Datensignale mit einer von 50 bit/s abweichenden Übertragungsgeschwindigkeit übertragen werden können. Beispielsweise können die durch die Zeitschlitze P9 bis P20 aufeinanderfolgender Unterrahmen gebildeten Zeitkanäle für die Übertragung von 100-bit/s-Datensignalen benutzt werden. Auch eine Mischung von Zeitkanälen für die Übertragung von 50-bit/s- und 100-bit/s Datensignale ist möglich.

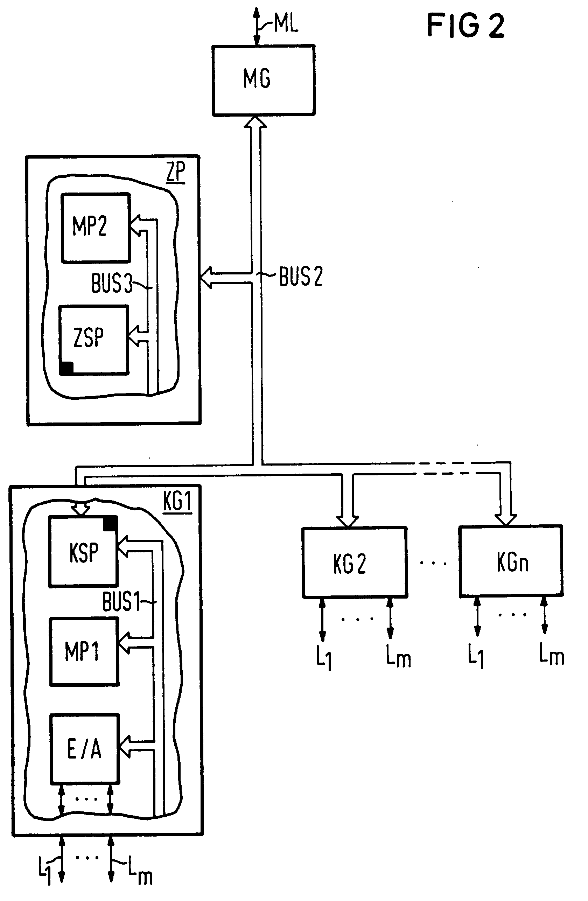

In FIG 2 ist eine Multiplexanordnung für die Übertragung von Datensignalen über eine Multiplex-Übertragungsleitung ML dargestellt. Diese Multiplexanordnung weist eine Vielzahl von gleich aufgebauten Kanalgruppen KG1 bis KGn auf. Jede dieser Kanalgruppen stellt eine Mikroprozessoranordnung dar, die ausschnittweise für die Kanalgruppe KG1 angegeben ist. Diese Mikroprozessoranordnung weist einen Mikroprozessor MP1 auf, der über ein Busleitungssystem BUS1 mit einer Ein-/Ausgabe-Einrichtung E/A verbunden ist. Diese Ein-/Ausgabe-Einrichtung stellt dabei die Schnittstelle zu einer Vielzahl von Übertragungsleitungen L1 bis Lm dar, über die beispielsweise Teilnehmereinrichtungen Datensignale in Form der genannten Envelopes an die Multiplexanordnung abgeben bzw. von dieser aufnehmen. Es ist jedoch auch möglich, die Kanalgruppen so auszulegen, daß an die Übertragungsleitungen L1 bis Lm Teilnehmereinrichtungen anschließbar sind, die Datensignale in Form von Start-Stop-Datensignalen aufnehmen bzw. abgeben. In diesem Falle würden die Kanalgruppen eine entsprechende Signalumnsetzung vornehmen.

Mit dem genannten Busleitungssystem BUS1 ist außerdem ein Kanalspeicher KSP verbunden. Dieser Kanalspeicher weist für jede der mit der betreffenden Kanalgruppe, hier mit der Kanalgruppe KG1, verbundene Übertragungsleitung einen Speicherbereich auf, in welchem an die jeweilige Übertragungsleitung abzugebende bzw. von dieser aufzunehmende Datensignale speicherbar sind.

Die genannten Kanalgruppen KG1 bis KGn sind über ein zentrales Busleitungssystem BUS2 mit einem Zentralprozessor ZP verbunden. Dieser Zentralprozessor übernimmt einerseits die Bildung von Multiplexsignalen gemäß der CCITT-Empfehlung X.51 und leitet diese Multiplexsignale über eine ebenfalls mit dem zentralen Busleitungssystem BUS2 verbundene Multiplexgruppe MG an die bereits genannte Multiplex-Übertragungsleitung ML weiter. Andererseits löst er über die Multiplexgruppe zugeführte Multiplexsignale in einzelne Datensignale auf und leitet diese an die zuvor genannten Kanalgruppen weiter. Die Multiplexgruppe MG dient im übrigen zur Anpassung der in FIG 2 dargestellten Multiplexanordnung an die Multiplex-Übertragungsleitung ML.

Der Zentralprozessor ZP weist eine Mikroprozessoranordnung auf, die in FIG 2 ausschnittweise dargestellt ist. Dieser Mikroprozessoranordnung ist ein Mikroprozessor MP2 zugehörig, der über ein Busleitungssystem BUS3 mit einem Zuordnungsspeicher ZSP verbunden ist. In diesem Zuordnungsspeicher ist für die Bildung bzw. Auflösung von Multiplexrahmen eine Tabelle gespeichert, aus welcher die Zuordnung zwischen den in den Multiplexrahmen festgelegten Zeitschlitzen und den einzelnen Kanalgruppen sowie den mit diesen verbundenen Übertragungsleitungen hervorgeht. Darüber hinaus weist der Mikroprozessor MP2 zwei in FIG 2 nicht näher dargestellte Zähleranordnungen auf, die jeweils mit einer der Anzahl der in einem Multiplexrahmen festgelegten Zeitschlitze entsprechenden Zählperiode umlaufen.

Eine der Zähleranordnungen dient dem Mikroprozessor MP2 für die Bildung von Multiplexsignalen. Anhand der Zählerstände dieser Zähleranordnung, die den Zeitschlitzen in den zu bildenden Multiplexrahmen entsprechen, und der in dem Zuordnungsspeicher ZSP gespeicherten Tabelle übernimmt der Mikroprozessor die in den Kanalspeichern der einzelnen Kanalgruppen KG1 bis KGn gespeicherten, in den jeweiligen Zeitschlitzen zu übertragenden Datensignalbits und fügt diese zusammen mit den von dem Mikroprozessor selbst gebildeten Steuersignalbits in Multiplexrahmen ein. Dabei werden auch diejenigen Datensignalbits übernommen, die in den nicht für die Übertragung von Steuersignalbits benutzten Zeitschlitzen der Steuerkanäle zu übertragen sind. Gemäß dem oben erläuterten Beispiel sind dies die Zeitschlitze P9 bis P20.

Die andere Zähleranordnung dient dem Mikroprozessor MP2 für die Auflösung von über die Multiplexgruppe MG aufgenommenen Multiplexsignalen. Diese Zähleranordnung wird durch die in diesen Multiplexsignalen übertragenen, für die Synchronisierung dienenden Steuersignale synchronisiert. Nach Maßgabe der Zählerstände dieser Zähleranordnung und der bereits genannten, in dem Zuordnungsspeicher ZSP gespeicherten Tabelle werden die in den einzelnen Zeitschlitzen auftretenden Datensignalbits in die jeweils in Frage kommenden Kanalspeicher KSP der Kanalgruppen KG1 bis KGn übertragen. Unter diese Datensignalbits fallen auch diejenigen, die zuvor in Zeitschlitzen von für die Übertragung von Steuersignalen nicht benutzten Steuerkanälen übertragen worden sind.

Vorstehend wurde die vorliegende Erfindung lediglich am Beispiel der Übertragung von Datensignalen nach einem Multiplexübertragungsprinzip gemäß der CCITT-Empfehlung X.51 erläutert. Die Erfindung ist jedoch allgemein immer dann anwendbar, wenn für die Übertragung von Datensignalen Multiplexrahmen festgelegt sind, in welchen für Steuerzwecke reservierte Zeitkanäle nur teilweise für die Übertragung von Steuersignalen benutzt sind.

## Patentansprüche

1. Schaltungsanordnung zum Übertragen von Datensignalen, die von einer Vielzahl von Datenübertragungseinrichtungen aufgenommen und/oder abgegeben werden, über eine im Zeitmultiplex-betrieb ausgenutzte Übertragungsleitung (ML), auf welcher für die Übertragung von Datensignalen jeder der Datenübertragungseinrichtungen entsprechend der für diese jeweils vorgesehenen Übertragungsgeschwindigkeit mindestens ein Zeitkanal einer Vielzahl von Zeitkanälen mit jeweils zyklisch wiederholt in aufeinanderfolgenden Multiplexrahmen auftretenden Zeitschlitzen zugeordnet ist, wobei von den insgesamt zur Verfügung stehenden Zeitkanälen eine festgelegte Anzahl als Steuerkanäle für die Übertragung von Steuersignalen reserviert ist und für die Übertragung von Steuersignalen nicht benutzte Steuerkanäle für die Übertragung von Datensignalen benutzbar sind,
**dadurch gekennzeichnet,**
daß eine Mehrzahl von mit Anschlußleitungen (L1,..., Lm) verbundenen Kanalgruppeneinrichtungen (KG1,..., KGn) vorgesehen ist, welche jeweils über Kanalspeichermittel (KSP) mit einer der Anzahl der Anschlußleitungen entsprechenden Anzahl von Speicherbereichen verfügen,
daß in dem jeweiligen Speicherbereich an die jeweilige Anschlußleitung abzugebende bzw. von dieser aufzunehmende Datensignale speicherbar sind,
daß die Kanalgruppeneinrichtungen (KG1,..., KGn) gemeinsam über ein Busleitungssystem (BUS2) mit einem Zentralprozessor (ZP) verbunden sind, welcher einerseits die Bildung von über die Übertragungsleitung (ML) abzugebende Multiplexrahmen und andererseits die Auflösung von über die Übertragungsleitung aufgenommenen Multiplexrahmen vornimmt,
daß in dem Zentralprozessor (ZP) Zuordnungsspeichermittel (ZSP) vorgesehen sind, in welchen die Zuordnung zwischen den in den Multiplexrahmen festgelegten Zeitkanälen und den Kanalgruppeneinrichtungen sowie den mit diesen verbundenen Anschlußleitungen (L1,..., Lm) gespeichert ist,
daß der Zentralprozessor (ZP) erste, in die Bildung von Multiplexrahmen einbezogene Zählmittel sowie zweite, in die Auflösung von Multiplexrahmen einbezogene Zählmittel aufweist, deren Zählerstände den Zeitschlitzen innerhalb eines Multiplexrahmens zugeordnet sind,
daß nach Maßgabe der Zählerstände der ersten Zählmittel und der in den Zuordnungsspeichermitteln (ZSP) gespeicherten Informationen die einzelnen Kanalgruppeneinrichtungen (KG1,..., KGn) für die Abgabe von in die Multiplexrahmen einzufügenden Datensignalen ansteuerbar sind
und daß nach Maßgabe der Zählerstände der zweiten Zählmittel und der in den Zuordnungsspeichermitteln gespeicherten Informationen den einzelnen Kanalgruppeneinrichtungen in Multiplexrahmen enthaltene Datensignale zuführbar sind.

2. Schaltungsanordnung nach Anspruch 1,
**dadurch gekennzeichnet,**
daß jede der Kanalgruppeneinrichtungen (KG1,..., KGn) jeweils eine Mikroprozessoranordnung (MP1) aufweist, an deren Busleitungssystem (BUS1) einerseits die Kanalspeichermittel (KSP) und andererseits eine Schnittstellenanordnung (E/A) angeschlossen ist, an welche die mit der jeweiligen Kanalgruppeneinrichtung verbundenen Anschlußleitungen (L1,..., Lm) herangeführt sind.

## Claims

1. Circuit arrangement for the transmission of data signals, which are picked up and/or emitted by a multiplicity of data transmission devices, via a transmission line (ML) which is used in time division multiplex operation and on which, for the transmission of data signals, each of the data transmission devices is assigned in accordance with the transmission speed respectively intended for it at least one time channel of a multiplicity of time channels with time slots in each case occurring cyclically repeated in successive multiplex frames, a fixed number of the time channels altogether available being reserved as control channels for the transmission of control signals, and control channels not used for the transmission of control signals being usable for the transmission of data signals, characterized in that there are provided a plurality of channel group devices (KG1,..., KGn) which are connected to subscriber lines (L1,..., Lm) and in each case have channel storing means (KSP) with a number of memory areas corresponding to the number of subscriber lines, in that in the respective memory area data signals to be emitted to the respective subscriber line or to be picked up from the latter can be stored, in that the channel group devices (KG1,..., KGn) are jointly connected via a bus line system (BUS2) to a central processor (ZP), which performs on the one hand the formation of multiplex frames to be emitted via the transmission line (ML) and on the other hand the dissolution of multiplex frames picked up via the transmission line, in that in the central processor (ZP) there are provided assignment storing means (ZSP), in which the assignment between the time channels fixed in the multiplex frames and the channel group devices along with the subscriber lines (L1,..., Lm) connected to them is stored, in that the central processor (ZP) has first counting means, included in the formation of multiplex frames, and second counting means, included in the dissolution of multiplex frames, the counter readings of which are assigned to the time slots within a multiplex frame, in that, according to the counter readings of the first counting means and the information stored in the assignment storing means (ZSP), the individual channel group devices (KG1,..., KGn) can be activated for the emission of data signals to be inserted into the multiplex frames, and in that, according to the counter readings of the second counting means and the information stored in the assignment storing means, the individual channel group devices can be fed data signals contained in multiplex frames.

2. Circuit arrangement according to Claim 1, characterized in that each of the channel group devices (KG1,..., KGn) has in each case a microprocessor arrangement (MP1), to the bus line system (BUS1) of which there is connected on the one hand the channel storing means (KSP) and on the other hand an interface arrangement (E/A), to which the subscriber lines connected to the respective channel group device are routed.

## Revendications

1. Montage pour la transmission de signaux de données qui sont reçus et/ou émis par une multiplicité de dispositifs de transmission de données, par l'intermédiaire d'une ligne de transmission (ML), qui est utilisée dans le fonctionnement en multiplexage temporel et dans laquelle, pour la transmission de signaux de données, à chacun des dispositifs de transmission de données est associé, en fonction de la vitesse de transmission prévue pour ce dispositif, au moins un canal temporel d'une multiplicité de canaux temporels comportant respectivement des créneaux temporels qui apparaissent respectivement d'une manière répétée de façon cyclique, dans des trames successives de multiplexage, et dans lequel un nombre fixé de l'ensemble des canaux temporels disponibles sont réservés en tant que canaux de commande pour la transmission de signaux de commande et les canaux de commande non utilisés pour la transmission de signaux de commande peuvent être utilisés pour la transmission de signaux de données,
caractérisé par le fait
qu'il est prévu une multiplicité de dispositifs de groupes de canaux (KG1,...,KGn), qui sont reliés à des lignes de raccordement (L1,...,Lm) et qui disposent respectivement de moyens de mémoires de canaux (KSP) comportant un nombre de zones de mémoire qui correspond au nombre des lignes de raccordement, que l'on peut mémoriser des signaux de données, qui doivent être délivrés à la ligne de raccordement respective ou doivent être reçus par cette dernière, peuvent être mémorisés dans la zone de mémoire respective,
que les dispositifs de groupes de canaux (KG1,..., KGn) sont reliés en commun, par l'intermédiaire d'un système de lignes de bus (BUS2), à un processeur central (ZP), qui, d'une part, exécute la formation de trames de multiplexage devant être délivrées par l'intermédiaire de la ligne de transmission (ML), et, d'autre part, procédent à la résolution des trames de multiplexage reçues par l'intermédiaire de la ligne de transmission,
que dans le processeur central (ZP) sont prévus des moyens de mémoire d'association (ZSP), dans lesquels est mémorisée l'association entre les canaux temporels fixés dans les trames de multiplexage et les dispositifs de groupes de canaux ainsi que les lignes de raccordement (L1,..., Ln) reliées à ces dispositifs,
que le processeur central (ZP) comporte des premiers moyens de comptage qui participent à la formation de trames de multiplexage, ainsi que des seconds moyens de comptage qui participent à la résolution des trames de multiplexage, dont les états de comptage sont associés aux créneaux temporels à l'intérieur d'une trame de multiplexage,
qu'en fonction des états de comptage des premiers moyens de comptage et des informations mémorisées dans les moyens de mémoire d'association (ZSP), les différents dispositifs de groupes de canaux (KG1, ..., KGn) peuvent être commandés pour la délivrance de signaux de données devant être insérés dans les trames de multiplexage, et
qu'en fonction des états de comptage des seconds moyens de comptage et des informations mémorisées dans les moyens de mémoire d'association, des signaux de données contenus dans des trames de multiplexage peuvent être envoyés aux différents dispositifs de groupes de canaux.

2. Montage suivant la revendication 1, caractérisé par le fait que chacun des dispositifs de groupes de canaux (KG1, ..., KGn) possède un dispositif à microprocesseur (MP1), au système de ligne formant bus (BUS1) duquel sont raccordés, d'une part, les moyens de mémoire de canaux (KSP) et, d'autre part, un dispositif d'interface (E/A), auquel sont raccordées les lignes de raccordement (L1, ..., Lm) reliées au dispositif respectif de groupes de canaux.
